# EUROPÄISCHE PATENTSCHRIFT

(11) **EP 4 527 567 B1**
(45) Veröffentlichungstag und Bekanntmachung des Hinweises auf die Patenterteilung: **14.01.2026**
(21) Anmeldenummer: 24198787.4
(22) Anmeldetag: 06.09.2024
(51) Int. Cl.: B25J 15/00, B25J 15/06, H01M 10/54, H01M 10/04

(54) **GREIFER ZUR DEMONTAGE EINES BATTERIEDECKELS**
GRIPPER FOR DISMANTLING BATTERY COVER
PINCE POUR LE DÉMONTAGE D'UN COUVERCLE DE BATTERIE

(30) Priorität: 19.09.2023 DE 102023125261
(43) Veröffentlichungstag der Anmeldung: 26.03.2025
(73) Patentinhaber: Liebherr-Verzahntechnik GmbH, 87437 Kempten (DE)
(72) Erfinder: Pollmann, Jan, 87437 Kempten (DE); Hößle, Florian, 87437 Kempten (DE); Hiemer, Lukas, 87437 Kempten (DE)
(74) Vertreter: Lorenz Seidler Gossel Part. mbB

(56) Entgegenhaltungen:
- CN-A- 105 598 673
- DE-A1- 102019 132 588
- JP-A- 2023 009 036
- JP-B2- 5 375 190
- US-A1- 2020 313 221

## Beschreibung

Die vorliegende Erfindung bezieht sich auf ein System zur automatisierten Demontage eines Deckels eines Gehäuses einer Batterieeinheit, sowie auf ein entsprechendes Verfahren.

Der straßengebundene Verkehr wird immer stärker elektrifiziert und mit dem kontinuierlich zunehmenden Bestand an Elektrofahrzeugen müssen auch immer mehr Batterien und ihre Gehäuse demontiert/// und recycelt beziehungsweise im Sinne eines geschlossenen Nutzungs- und/oder Materialkreislaufes wiederverwendet werden. Das Gefahrgutrecht fordert in bestimmten Fällen die Demontage der HV-Batterien in Fahrzeugen bis auf Modulebene vor dem Abtransport zum Recycling, um beispielsweise einen Brand oder eine Explosion zu vermeiden.

Die bisherige, manuelle Demontagemethode eines Deckels einer Batterieeinheit birgt allerdings die Gefahr von Arbeitsunfällen, insbesondere in Hinblick auf das stark gestiegene Gewicht der Modularen E-Antriebsbaukästen, in welchen das Batteriesystem integriert ist. Zudem ist das Öffnen des Batterieeinheitsgehäuses, sowie das notwendige, manuelle Verfahren des abgelösten Deckels zu einem Zielablageort, um die in der Batterieeinheit enthaltenen Batteriemodule für die weitere Demontage freizulegen, anstrengend und zeitaufwändig für die Fachkraft. Zudem besteht die Hochvoltgefahr für den Werker, sobald der Deckel angenommen ist. Je nach Batteriesystem-Design können offenliegende elektrische Kontakte eine tödliche Spannung aufweisen. Auch sind die bisher verwendeten Werkzeuge nur begrenzt geeignet für die Demontage und die zunehmende Zahl an unterschiedlichen Batterie-Systemen steht einer vollkommenen Automatisierung des Demontageprozesses entgegen.

Aus der Offenlegungsschrift DE 102021 204 685 A1 ist ein Verfahren zur Demontage eines Batteriegehäuses eines HV-Batteriesystems bekannt, wobei ein Rollenschneider in eine Klebenaht zwischen zwei Gehäuseteile eingefahren wird, wodurch die Naht aufgeschnitten wird und somit das Batteriegehäuse öffnet. Auch diese Vorgehen ist jedoch aufwendig und nur für spezielle Gehäuse einsetzbar.

Druckschrift US 2020/313221 A1 zeigt eine Greifvorrichtung zum Greifen und Transportieren eines Werkstücks, insbesondere einer Batterieeinheit, mit einer Seitenstützeinheit, die zum Stützen oder Freigeben einer Seite des Werkstücks konfiguriert ist, mehreren Schieberelementen, die zum Herunterdrücken des Werkstücks konfiguriert sind, einer Schieberelement-Verschiebeeinheit, die zum Verschieben der Schieberelemente in eine Richtung zum Werkstück hin oder davon weg konfiguriert ist, und einen Eingriffsstift, der in mindestens einem der Schieberelemente angeordnet und zum Eingriff mit einem im Werkstück ausgebildeten Durchgangsloch konfiguriert ist. Weitere Greifvorrichtungen sind aus Druckschriften DE 10 2019 132588 A1 und JP 5 375190 B2 bekannt.

Aufgabe der vorliegenden Erfindung ist es daher, vorgenannte Probleme zu lösen und damit die Demontage eines Deckels von einem Batterieeinheitsgehäuse zu automatisieren, sowie die Dauer des Demontage-Prozesses zu reduzieren und die Anwendbarkeit der Demontage-Methode im Serienmaßstab auf weitere Batterietypen zu ermöglichen.

Erfindungsgemäß wird die genannte Aufgabe durch ein System gemäß Anspruch 1 sowie ein entsprechendes Verfahren gemäß Anspruch 14 gelöst. Vorteilhafte Ausgestaltungen und Weiterentwicklungen der Erfindung sind Gegenstand der Unteransprüche.

Die vorliegende Erfindung umfasst hierbei ein System zur automatisierten Demontage eines Deckels einer Batterieeinheit mit einem Greifer, einer Handlingeinheit, insbesondere einem Roboter, und einer Steuerung. Es wird also nach einem Aspekt der Erfindung vorgeschlagen, ein System mit einem Greifer zur automatisierten Demontage eines Deckels eines Batterieeinheitsgehäuses zu verwenden. Besagter Greifer ist an einer Schnittstelle an der Handlingeinheit, montiert und weist einen Tragrahmen und eine Mehrzahl von Abdrückeinheiten zum Ablösen des Deckels eines Batterieeinheitsgehäuses von dem Batterieeinheitsgehäuse auf. Die Abdrückeinheiten umfassen jeweils ein Abdrückelement, welches unter eine Kontur des Deckels des Batterieeinheitsgehäuses fahrbar ist und ein Abstützelement, und einen Aktor. Die Abdrückelemente sind mittels des entsprechenden Aktors anhebbar, wobei sich dieAbdrückeinheiten über die Abstützelemente an einem Gegenelement abstützen. Die Abdrückelemente können jeweils eine Abdrückfläche und die Abstützelemente jeweils eine Abstützfläche aufweisen. Durch das erfindungsgemäße System lässt sich die Demontage des Deckels in einfacher Weise automatisieren. Die Steuerung ist hierbei so ausgestaltet, dass sie die Handlingeinheit und den Greifer so ansteuert, dass die Demontage des Deckels automatisiert erfolgt

Bei der Handlingeinheit kann es sich insbesondere um einen Roboter handeln, beispielsweise einen Roboter mit mehreren rotatorischen Achsen. Als Handlingeinheit kann aber auch ein Linear- oder Flächenportal eingesetzt werden.

Nach einem bevorzugten Aspekt der Erfindung sind die Abdrückeinheiten umfassend das Abdrückelement, das Abstützelement, sowie den Aktor durch mindestens einen Verfahraktor verfahrbar an dem Tragrahmen angeordnet. Insbesondere sind sie über mindestens einen Schwenkaktor schwenkbar oder über einen Linearaktor linear verfahrbar an dem Tragrahmen angeordnet.

Gemäß einer möglichen Ausgestaltung der vorliegenden Erfindung ist vorgesehen, dass die Abdrückelemente durch Verfahren der jeweiligen Abdrückeinheit in einen Arbeitszustand mittels des Verfahraktors unter die Kontur des Deckels verfahrbar sind.

Gemäß einer möglichen Ausgestaltung der vorliegenden Erfindung ist vorgesehen, dass sich die Abstützelemente im Arbeits-Zustand an einer unterhalb der Kontur des Deckels angeordneten Kontur des Batterieeinheitsgehäuses, insbesondere im Bodenbereich des Batterieeinheitsgehäuses, abstützen.

Gemäß einer möglichen Ausgestaltung der vorliegenden Erfindung können die Abdrückeinheiten zwischen einer inaktiven Position, in welcher die Abdrückelemente außer Eingriff mit der Kontur des Deckels sind, und einer Arbeits-Position, in welcher sich die Abdrückelemente in ihrem Arbeits-Zustand befinden und unter die Kontur des Deckels greifen, hin und her verfahren werden.

Gemäß einer ersten möglichen Ausgestaltung der vorliegenden Erfindung können die Abdrückeinheiten hierbei zwischen der inaktiven Position, in welcher sie seitlich nach außen zeigen, und der Arbeits-Position, in welcher sie nach unten zeigen, hin und her schwenken.

Vorzugsweise werden die Abdrückeinheiten aus der inaktiven Position in Richtung auf eine Seitenwand des Batterieeinheitsgehäuses zu in die aktive Position eingeschwenkt.

Gemäß einer zweiten möglichen Ausgestaltung der vorliegenden Erfindung können die Abdrückeinheiten zwischen der inaktiven Position, in welcher sie seitlich beabstandet zum Deckel angeordnet sind, in die Arbeits-Position am Deckel hin und her verfahren werden.

Gemäß einer möglichen Ausgestaltung der vorliegenden Erfindung umfasst der Greifer eine Breiten- und/oder Längenverstellung, über welche der im Arbeits-Zustand bestehende Abstand der Abdrückeinheiten voneinander veränderbar ist. Hierdurch kann der Greifer an unterschiedlich große Batterieeinheiten angepasst werden.

Gemäß einer möglichen Ausgestaltung der vorliegenden Erfindung ist hierfür mindestens eine Verstellachse vorgesehen, an welcher eine oder mehrere Abdrückeinheiten verstellbar angeordnet sind.

Die Verstellung kann händisch oder durch einen oder mehrere Aktoren erfolgen.

Gemäß einer ersten möglichen Ausgestaltung der vorliegenden Erfindung bilden eine oder mehrere Abdrückeinheiten zusammen mit einem Verfahraktor, über welchen das Abdrückelement unter die Kontur des Deckels verfahrbar ist, eine Baueinheit, welche an der Verstellachse verstellbar angeordnet ist.

Insbesondere können die eine oder mehreren Abdrückeinheiten und der Verfahraktor an einer Konsole angeordnet sein, welche an der Verstellachse verstellbar angeordnet ist.

Gemäß einer zweiten möglichen Ausgestaltung der vorliegenden Erfindung ist der im Arbeits-Zustand bestehende Abstand der Abdrückeinheiten voneinander über jene Verfahraktoren, über welche die Abdrückeinheiten in ihren Arbeits-Zustand verfahrbar sind, einstellbar. Insbesondere wenn als Verfahraktor ein Linearaktor eingesetzt wird, kann dieser gleichzeitig auch zur Einstellung des der im Arbeits-Zustand bestehenden Abstands der Abdrückeinheiten voneinander eingesetzt werden. Hierfür muss lediglich der Nullpunkt des Linearaktors entsprechend eingestellt werden.

Gemäß einer möglichen Ausgestaltung der vorliegenden Erfindung kann derAbstand zwischen der Abdrückfläche einer Abdrückeinheit und der in der gleichen Abdrückeinheit integrierten Abstützfläche durch den Aktor verändert werden, wobei bevorzugt die Abdrückelemente durch den jeweiligen Aktor linear gegenüber dem jeweiligen Abstützelement verfahrbar sind, um die Abdrückfläche anzuheben.

Gemäß einer möglichen Ausgestaltung der vorliegenden Erfindung weisen die Abdrückeinheiten jeweils einen Verbindungsbereich auf, über welchen sie mit dem Tragrahmen in Verbindung stehen, wobei das jeweilige Abdrückelement gegenüber dem Verbindungsbereich beweglich an der Abdrückeinheit angeordnet ist, so dass der Verbindungsbereich und damit der Tragrahmen beim Anheben des Abdrückelements nicht angehoben wird. Hierdurch werden die bei Abdrücken entstehenden Kräfte nicht in den Tragrahmen übertragen.

Gemäß einer möglichen Ausgestaltung der vorliegenden Erfindung sind die Abdrückeinheiten so ausgeführt, dass bei einem Betätigen des jeweiligen Aktors zunächst das Abstützelement gegen die Abstützkontur verfahren wird und daraufhin das Abdrückelement angehoben und gegen die Kontur des Deckels verfahren wird.

Gemäß einer möglichen Ausgestaltung der vorliegenden Erfindung sind sowohl das Abstützelement als auch das Abdrückelement gegenüber dem Verbindungsbereich beweglich an der jeweiligen Abstützeinheit angeordnet.

Gemäß einer möglichen Ausgestaltung der vorliegenden Erfindung sind die Abdrückelemente jeweils entlang einer Führung an der Abdrückeinheit geführt.

Insbesondere wird bei der Abdrückbewegung das Abdrückelement entlang der Führung der Abdrückeinheit nach oben verfahren. Hierdurch werden die Abdrückkräfte nicht auf den Tragrahmen und/oder die Handlingeinheit übertragen sondern von der Abdrückeinheit aufgenommen.

Bei den Aktoren der Abdrückeinheiten kann es sich insbesondere um Linearaktoren, beispielsweise um Hydraulik-, Elektrik- und/oder Pneumatikzylinder handeln.

Gemäß einer möglichen Ausgestaltung der vorliegenden Erfindung sind die Aktoren, über welchen die Abdrückelemente angehoben werden, entlang einer Führung an der Abdrückeinheit beweglich angeordnet.

Bevorzugt sind die Aktoren über eine Feder in eine Position vorgespannt, in welcher sich die Abdrückelemente in einer von der Kontur des Deckels entfernten Ausgangsposition befinden, und fahren das Abdrückelement gegen die Vorspannung der Feder gegen die Kante des Deckels.

Gemäß einer möglichen Ausgestaltung der vorliegenden Erfindung sind Abstützelemente beweglich an der Abdrückeinheit angeordnet. Hierdurch können diese gegen die Abstützkontur verfahren werden, ohne dass der Greifer verfahren würde.

Bevorzugt sind die Aktoren, insbesondere die Linearaktoren jeweils inklusive des jeweiligen Abdrückelements und Abstützelements beweglich an der Abdrückeinheit gelagert und insbesondere entlang der Führung beweglich.

Bevorzugt sind die Abdrückelemente jeweils an einem Zylinder des Linearaktors angeordnet, die Abstützelemente am Kolben.

Die Aktoren der Abdrückeinheiten können in einer Ausführungsform separat ansteuerbar sein.

In einer bevorzugten Ausführungsform der Erfindung befinden sich ein oder mehrere Greifelemente, insbesondere Sauggreifelemente an der Unterseite des Greifers, wobei mittels besagter Greifelemente der Deckel des Batterieeinheitsgehäuses an dessen Oberseite gehalten werden kann. Anstelle eines Sauggreifers kann auch ein Magnetgreifer eingesetzt werden, wenn der Deckel aus einem ferromagnetischen Werkstoff besteht.

Gemäß einer möglichen Ausgestaltung der vorliegenden Erfindung kann die Schnittstelle des Greifers, über welche der Greifer an einer Handlingeinheit, insbesondere einem Roboterarm, montiert ist, eine Ausgleichseinheit aufweisen.

Gemäß einer möglichen Ausgestaltung der vorliegenden Erfindung kann die Ausgleichseinheit mittels eines Aktors starr geschalten werden.

Wird die Ausgleichseinheit dagegen freigeschaltet, ermöglicht diese eine Relativbewegung des Tragrahmens, an welchen die Ausgleichseinheit angebunden ist, gegenüber der Schnittstelle.

Gemäß einer möglichen Ausgestaltung der vorliegenden Erfindung ist die Steuerung so ausgestaltet, dass mindestens zwei Abdrückeinheiten nacheinander betätigt werden, um den Deckel anzuheben, wobei die beiden Abdrückeinheiten bevorzugt nebeneinander angeordnet sind und/oder wobei die Abdrückeinheiten des Greifers bevorzugt nacheinander um den Rand des Deckels umlaufend betätigt werden.

**In** einer bevorzugten Ausgestaltung wird das Ablösen des Deckels durch Betätigung einer im Bereich einer Ecke des Deckels angeordneten Abdrückeinheit begonnen und darauffolgend benachbarte Abdrückeinheiten um den Deckel umlaufend betätigt.

**In** einer alternativen Ausgestaltung werden alle Abdrückeinheiten gleichzeitig betätigt.

Die Steuerung kann nach einem Aspekt der Erfindung so ausgestaltet sein, dass nach dem Ablösen des Deckels eines Batterieeinheitsgehäuses der Deckel, während er von der Handlingeinheit zum Zielablageort gefahren wird, weiterhin durch die Abdrückelemente gehalten und/oder gesichert wird.

Gemäß einer möglichen Ausgestaltung der vorliegenden Erfindung geben die Abdrückelemente zum Ablegen des Deckels die Kontur des Deckels frei, insbesondere indem die Abdrückeinheiten von der Kontur des Deckels weg verfahren werden, insbesondere indem diese durch die jeweiligen Verfahraktoren in ihre inaktive Position bewegt werden, beispielsweise mittels der Schwenkaktoren in eine seitlich nach außen zeigende Position geschwenkt oder mittels Linearaktoren in eine seitlich beabstandete Position werden.

Zur Unterstützung der Abdrückelemente kann in einer Ausführungsform der Erfindung der Deckel, während des Verfahrens zum Zielablageort mittels der Handlingeinheit, durch einen oder mehrere Greifelemente, welche bevorzugt an der Oberseite des Deckels angreifen, insbesondere Saug- oder Magnetgreifelement, gehalten werden.

Das oder die Greifelemente werden vorzugsweise erst aktiviert, nachdem die Abdrückelemente der Abdrückeinheiten unter die Kontur des Deckels eines Batterieeinheitsgehäuses gefahren wurde und/oder bleiben vorzugsweise noch aktiv, nachdem die Abdrückelemente der Abdrückeinheiten in eine inaktive Position verfahren wurden und damit die Kontur des Deckels des Batterieeinheitsgehäuses freigegeben wurde, um ein sicheres Ablegen an dem Zielablageort durch den Roboterarm zu ermöglichen.

Um Positionstoleranzen und Werkstücktoleranzen ausgleichen zu können, kann die Steuerung so ausgestaltet sein, dass, während die Abdrückelemente unter die Kontur des Deckels gefahren werden, insbesondere während die Abdrückelemente durch Verfahren der Abdrückeinheiten unter die Kontur des Deckels gefahren werden, die Ausgleichseinheit freigeschaltet ist.

Ebenso kann die Steuerung derart ausgestaltet sein, dass die Ausgleichseinheit freigeschaltet ist, während die Aktoren der Abdrückeinheiten aktiviert werden, um den Deckel von dem Batterieeinheitsgehäuse zu lösen.

Gemäß einer möglichen Ausgestaltung der vorliegenden Erfindung handelt es sich bei der Handlingeinheit um einen Roboter, insbesondere um einen Roboter mit einem Roboteram mit mehreren rotatorischen Achsen. Beispielsweise kann es sich um einen Industrieroboter mit mindestens 6 Achsen handeln. Alternativ kann auch ein Linear- und/oder Flächenportal als Handlingeinheit eingesetzt werden.

Gemäß einer möglichen Ausgestaltung der vorliegenden Erfindung ist die Steuerung so ausgestaltet, dass sie die Handlingeinheit und den Greifer so ansteuert, dass diese die oben und im folgenden beschriebenen Funktionen und/oder Schritte durchführen. Insbesondere kann die Steuerung so ausgestaltet sein, dass die Handlingeinheit und der Greifer die Funktionen und/oder Schritte automatisiert durchführen.

Gemäß einer möglichen Ausgestaltung der vorliegenden Erfindung umfasst die oben oder im folgenden beschriebene Steuerung oder Steuerungen einen Mikroprozessor und einen nicht-flüchtigen Speicher, auf welchem ein Computerprogramm abgespeichert ist, welches beim Ablaufen auf dem Mikroprozessor die oben sowie im folgenden beschriebenen Funktionen und/oder Schritte durchführt. Die Steuerung und insbesondere der Microprozessor steht bevorzugt mit den Aktoren und/oder Sensoren des Greifers und/oder der Handlingeinheit in einer Steuer- und/oder Signalverbindung und steuert die Aktoren an und/oder wertet die Signale der Sensoren aus.

Die Erfindung umfasst weiterhin ein entsprechendes Verfahren zur automatisierten Demontage des Deckels eines Batterieeinheitsgehäuses unter Verwendung eines Systems, wie es oben beschrieben wurde, in welchem die unter die Kontur des Deckels greifenden Abdrückelemente mittels des jeweiligen Aktors angehoben werden, während sich die Abdrückeinheiten über das jeweilige Abstützelement an einem Gegenelement abstützen.

Das Verfahren erfolgt bevorzugt so, wie dies bereits oben im Hinblick auf den Greifer und das System näher beschrieben wurde.

Die Erfindung wird nachfolgend anhand eines bevorzugten Prozessablaufs und unter Einbeziehung der Darstellungen eines Ausführungsbeispiels des erfindungsgemäßen Systems aus verschiedenen Perspektiven näher erläutert. In den Zeichnungen zeigen:
- Fig. 1:: Eine perspektivische Darstellung eines Ausführungsbeispiels des Greifers eines erfindungsgemäßen Systems, wobei der Greifer dazu ausgebildet ist mittels eines Roboterarms und einer Steuerung durch das Aktivieren von Abdrückeinheiten über verschiedene Aktoren einen Deckel eines Batterieeinheitsgehäuses zu demontieren,
- Fig. 2a:: Eine Seitenansicht des Aufbaus eines Greifers mit Abdrückeinheiten, wobei der Greifer über eine Schnittstelle an einen Roboterarm angebunden ist und wobei der Tragrahmen des Greifers zusätzlich mindestens ein Sauggreifelement aufweisen kann, wobei zur Verdeutlichung ein Roboterarm an der Oberseite des Greifers gezeigt ist,
- Fig. 2b:: Eine Seitenansicht des Aufbaus eines Greifers mit Abdrückeinheiten, wobei zur Verdeutlichung ein Roboterarm an der Oberseite des Greifers montiert ist,
- Fig. 3:: Eine Draufsicht des Aufbaus eines Greifers mit Abdrückeinheiten,
- Fig. 4:: Eine Detailansicht einer Abdrückeinheit eines Greifers des erfindungsgemäßen Systems umfassend ein Abdrückelement, einen Aktor und ein Abstütze- lement, wobei zur Verdeutlichung ein mögliches Batterieeinheitsgehäuse mit einem Deckel und einem Gegenelement, das dem Bodenbereich des Batterieeinheitsgehäuses entspricht, dargestellt ist, und
- Fig. 5:: eine weitere Detailansicht einer Abdrückeinheit eines Greifers des erfindungsgemäßen Systems.

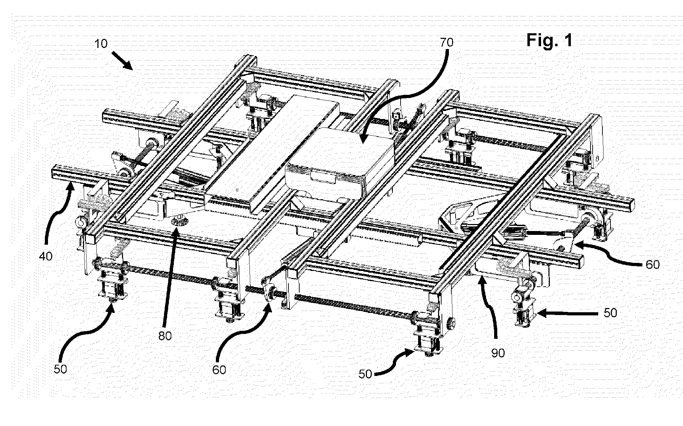

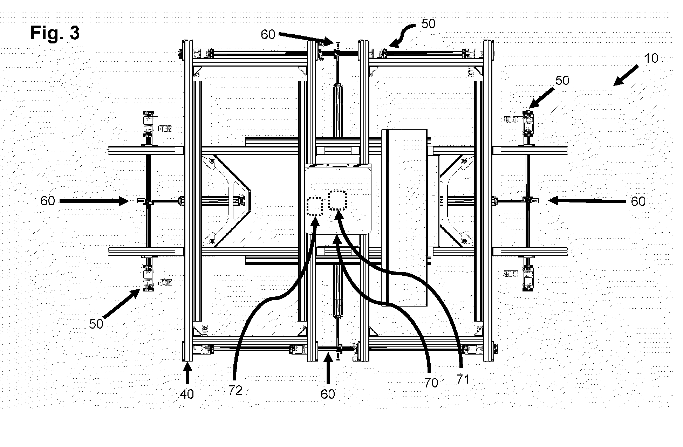

Fig. 1 bis 5 zeigen ein Ausführungsbeispiel eines erfindungsgemäßen System mit einem Greifer 10.

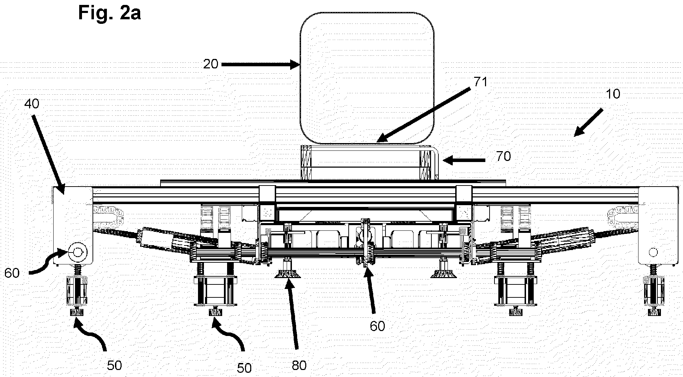

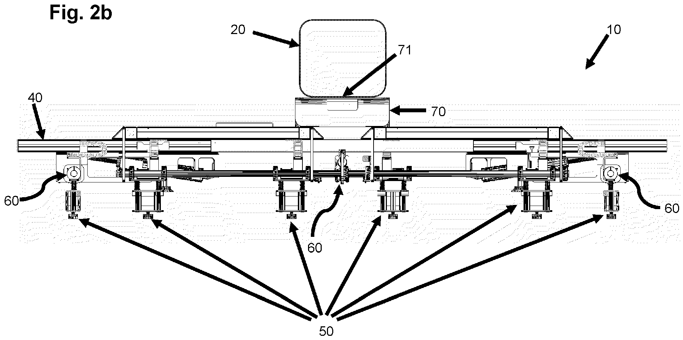

Dieser umfasst eine Schnittstelle 70, über welche er an eine in Fig. 2a schematisch dargestellte Handlingeinheit 20, beispielsweise an das Endglied eines Roboterarms, montiert wird.

Die Schnittstelle 71 ist an einem Tragrahmen 40 angeordnet, welcher die weiteren Komponenten des Greifers trägt. Im Ausführungsbeispiel ist der Tragrahmen 40 aus Längs- und Querstreben gefertigt.

An dem Tragrahmen 40 sind Abdrückeinheiten 50 angeordnet, über welche der Deckel 31 eines Batterieeinheitsgehäuses 30 gegriffen und angehoben werden kann.

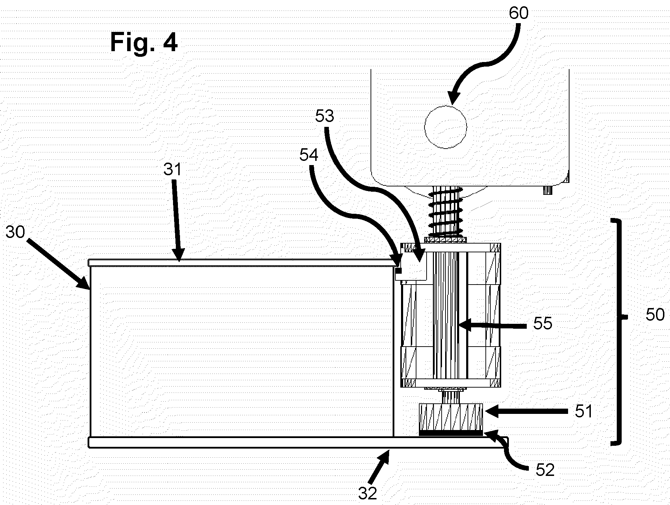

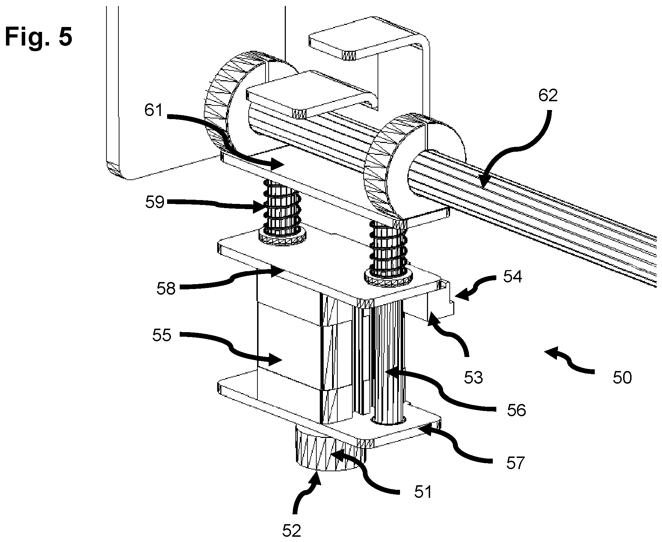

Die in Figur 4 und 5 detailliert gezeigten Abdrückeinheiten 50 umfassen jeweils ein Abstützelement 51 mit einer Abstützfläche 52, ein Abdrückelement 53 mit einer Abdrückfläche 54 und einem Aktor 55, im Ausführungsbeispiel einen Linearaktor 55.

DieAbdrückelemente 53 sind über den Aktor entlang einer Führung 56 derjeweiligen Abdrückeinheit linear nach oben verfahrbar, während sich die Abdrückeinheit über das Abstützelement 51 abstützt. DieAbdrückelemente 53 sind über eine Feder 59 in ihre untere Position vorgespannt.

Im Ausführungsbeispiel werden die Abdrückeinheiten 50 durch die Betätigung der Linearaktoren 55 daher nicht angehoben, sondern nur die Abdrückelemente 53, so dass die Abdrückbewegung nicht auf einen Verbindungsbereich 61 der Abdrückeinheit 50, mit welchem diese mit dem Tragrahmen in Verbindung steht, und damit auch nicht auf den Tragrahmen des Greifers übertragen wird.

Das Abstützelement 51 ist nach unten ausfahrbar und hebt daher die Abdrückeinheit 50 mit dem Abdrückelement 53 entlang der Führung 56 an.

Im Ausführungsbeispiel ist der Aktor 55 entlang der Führung 56 verschieblich gelagert, wobei sowohl das Abdrückelement 53 als auch das Abstützelement 51, welche an dem Aktor angeordnet sind und deren Abstand durch Betätigen des Aktors veränderbar ist, beweglich an der Abdrückeinheit angeordnet sind.

Bei dem Aktor 55 handelt es sich im Ausführungsbeispiel um eine Kolben-Zylindereinheit, wobei das Abstützelement 51 am Kolben angeordnet ist und das Abdrückelement 53 am Zylinder.

Der Zylinder ist an der oberen Platte 58 montiert, welche entlang der Führung 56 gegen die Kraft der Feder 59 verfahrbar ist. Die untere Platte 57 ist an der Führung 57 montiert und dient als Anschlag für den Zylinder, während der Kolben durch eine Öffnung in der Platte 57 hindurchgeht.

Durch Betätigen des Aktors 55 wird zunächst das Abstützelement 51 mit der Abstützfläche gegen das Gegenelement verfahren. Stützt sich das Abstützelement 51 an dem Gegenelement ab, führt ein weiteres Betätigen des Aktors dazu, dass das Abdrückelement angehoben wird und entlang der Führung 56 nach oben verfährt.

Im Ausführungsbeispiel fährt hierbei der Kolben der Kolben-Zylindereinheit zunächst durch die Öffnung in der Platte 57 hindurch aus. Stützt sich das Abstützelement 51 an dem Gegenelement ab, führt ein weiteres Ausfahren des Kolbens dazu, dass der Zylinder und damit das daran angeordnete Abstützelement 53 gegenüber der Platte 57 angehoben werden.

Die Führung ist an dem Verbindungselement 61 montiert. Im Ausführungsbeispiel besteht sie aus zwei Stangen, welche auf gegenüberliegenden Seiten des Aktors verlaufen.

Durch die erfindungsgemäße Ausgestaltung der Abdrückeinheiten muss der Greifer nur in einer festen Arbeitsposition über dem Deckel angeordnet werden, während alle anderen Bewegungen durch Aktoren des Greifers erfolgen. Weiterhin werden die entstehenden Demontagekräfte nicht auf den Rahmen übertragen. Nur die Kraft durch das Eindrücken der Federn muss von dem Rahmen aufgenommen werden. Die Demontage-Kräfte werden daher auch nicht auf die Handlingeinheit übertragen.

In dem in den Figuren gezeigten Ausführungsbeispiel sind die Abdrückeinheiten 50 mittels mindestens einem Schwenkaktor 60 schwenkbar an dem Tragrahmen 40 angeordnet. Die Abdrückeinheiten 50 werden mittels der Schwenkaktoren 60 aus einer inaktiven, seitlich nach außen zeigenden Position, in eine aktive, nach unten gerichtete Arbeitsposition eingeschwenkt. In der Figur 2a befinden sich die Abdrückeinheiten 50 demnach in einer aktiven Position. Durch das Verschwenken nach unten werden die Abdrückelemente 53 der Abdrückeinheiten unter die Kontur des Deckels 31 des Batterieeinheitsgehäuses 30 eingefahren.

Im Ausführungsbeispiel sind die einer Seite des Tragrahmens zugeordneten Abdrückeinheiten jeweils gemeinsam auf einer Schwenkachse 62 angeordnet, welche durch einen Aktor, im Ausführungsbeispiel einen Hydraulik- und/oder Peneumatikzylinder, gedreht wird, um die daran angeordneten Abdrückeinheiten zu verschwenken.

Es besteht auch die Möglichkeit, anstelle des Schwenkaktors mindestens einen Linearaktor zu verwenden, der die Abdrückeinheiten 50 in der Ebene des Tragrahmens 40 verfahren kann, sodass die Abdrückeinheiten 50 nicht eingeschwenkt, sondern seitlich unter die Kontur des Deckels 31 des Batterieeinheitsgehäuses gefahren werden.

Durch das Einschwenken oder Heranfahren wird eine Abdrückfläche 54 des Abdrückelements 53 unter eine Kontur des Deckels 31 gefahren. Gleichzeitig wird die Abstützfläche 52 des Abstützelementes 51 über einem Gegenelement platziert, hier einer Kante 32 des Bodens des Batterieeinheitsgehäuses 30. Die Abdrückeinheit befindet sich nun in ihrem Arbeits-Zustand bzw. ihrer Arbeits-Position. Durch Betätigen des Aktors 55 kann nun das Abstützelement 51 in Kontakt mit dem Gegenelement gebracht werden und das Abdrückelement angehoben und gegen die Kontur des Deckels verfahren werden, um diesen abzudrücken.

Zu Anpassung des Greifers an die Abmessungen des Deckels 31 des Batterieeinheitsgehäuses 30 sind die Abdrückeinheiten längen- und/oder breitenverstellbar am Tragrahmen angeordnet,

Im Ausführungsbeispiel sind die entlang der beiden Schmalseiten des Greifers angeordneten Abdrückeinheiten jeweils zusammen mit dem entsprechenen Schwenkaktor auf einer Konsole 90 angeordnet, welche an den Streben des Tragrahmens verschieblich geführt ist und manuell in unterschiedlichen Positionen anordenbar ist, so dass eine Anpassung an unterschiedlich lange Deckel möglich ist. Anstelle oder zusätzlich zu dieser Längenverstellung könnten auch die an den Breitseiten des Greifers zur Bereitstellung einer Breitenverstellung verschieblich am Tragrahmen angeordnet sein. Alternativ zur manuellen Verstellung könnte zum Verstellen auch ein Aktor eingesetzt werden.

Wird anstelle eines Schwenkaktors ein Linearaktor zum Zustellen der Abdrückeinheiten eingesetzt, kann auch dieser zusammen mit den Abdrückeinheiten auf einer Konsole angeordnet sein, welche ihrerseits am Tragrahmen verschieblich angeordnet ist und manuell oder über einen Aktor verschoben wird.

Weiterhin besteht die Möglichkeit, jede Abdrückeinheit mit einem eigenen ihr zugeordneten Verfahraktor auszustatten und jede Abdrückeinheit separat verstellbar am Tragrahmen anzuordnen. Hierdurch kann der Greifer auch an unterschiedliche Formen einer Batterieeinheit angepasst werden.

Wird als Verfahraktor ein Linearaktor eingesetzt, kann dieser auch sowohl zum Zustellen der Abdrückeinheit oder Abdrückeinheiten und zur Einstellung der Position der Abdrückeinheiten am Tragrahmen eingesetzt werden. Auf eine separate Verstellanordnung kann in diesem Fall verzichtet werden.

Gemäß einem Aspekt der Erfindung ist an der Schnittstelle 71 eine schaltbare Ausgleichseinheit 70 vorgesehen ist, welche in einem freigeschalteten Zustand eine Relativbewegung des Tragrahmens 40 gegenüber der Schnittstelle 71 ermöglicht. Nach einem Aspekt der Erfindung kann die Ausgleichseinheit 70 einen Aktor 72, aufweisen, der die Ausgleichseinheit 70 starr schalten kann, wodurch keine Relativbewegungen des Tragrahmens 40 gegenüber der Schnittstelle 71 möglich ist.

Die Demontage eines Deckels einer Batterieeinheit erfolgt in einem Ausführungsbeispiel wie folgt:
Um mit dem Greifer 10 mit Abdrückeinheiten 50 einen Deckel 31 eines bereits aus einem Elektrofahrzeug entfernten Batterieeinheitsgehäuses 30, dessen Schraubverbindung mit dem Deckel 31 zuvor manuell oder automatisiert gelöst wurde, von dem mit dem Deckel 31 nur mehr verklebten Batterieeinheitsgehäuse 30 zu lösen, wird der Greifer 10 mittels des Roboterarms 20 auf den Deckel 31 verfahren.

Nunmehr werden die Abdrückeinheiten unter die Kontur des Deckels 31 des Batterieeinheitsgehäuses 30 gefahren, was im Ausführungsbeispiel durch Verschwenken, alternativ durch seitliches Verfahren, erfolgt.

Während des Verfahrens der Abdrückeinheiten 50 beziehungsweise der Abdrückelemente 53 unter die Kontur des Deckels 31 ist die Ausgleichseinheit 70 durch die Steuerung des Greifers 10 freigeschaltet, um damit Positionstoleranzen und Werkstücktoleranzen ausgleichen zu können. Dadurch kann sich der Greifer 10 über dem Deckel 31 zentrieren.

Sind die Abdrückeinheiten 50 in ihrer Arbeitsposition am Gehäuse, werden die Linearaktoren 55 der Abdrückeinheiten 50, welche beispielsweise in Form von Hydraulikzylindern vorliegen können, aktiviert. Hierdurch werden die jeweiligen Abdrückflächen 54 der Abdrückelemente 53 von unten gegen die Kontur des Deckels 31 gedrückt, wobei sich die Abstützelemente 51 über die jeweiligen Abstützflächen 52 an dem Gegenelement 32 abstützen.

Der Deckel 31 wird nun durch das Betätigen der Linearaktoren 55, durch welche der Abstand zwischen den Abdrückelementen 53 und den jeweiligen Abstützelementen 51 veränderbar ist, angehoben, indem die Abdrückflächen 54 von unten gegen den Deckel 31 des Batterieeinheitsgehäuses 30 gedrückt werden, wobei sich die Abstützelemente 51 über die Abstützflächen 52 gegen das Gegenelement 32 abstützen.

Die Linearaktoren 55 der Abdrückeinheit 50 können separat ansteuerbar sein. Auf diese Weise können verschiedene Abdrückstrategien verfolgt werden. Beispielsweise ist es möglich, zuerst die Abdrückeinheit 50 in einer vordefinierten Ecke des Tragrahmens 40 zu betätigen und anschließend, von dieser Ecke ausgehend, jeweils diagonal zueinander angeordnete Abdrückeinheiten 50 zu betätigen. Insbesondere können die Abdrückeinheiten 50 nacheinander um den Rand des Deckels 31 umlaufend betätigt werden. Alternative Abdrückstrategien sind jederzeit möglich, um einen optimalen Prozess zu erhalten. Die Abdrückeinheiten können z.B. in zumindest einem Betriebsmodus auch gleichzeitig betätigt werden.

Der Deckel 31 wird nach dem Lösen durch die inArbeits-Position bleibenden Abdrückelemente 53 der Abdrückeinheiten 50 in Position gehalten und/oder gesichert, während er über den Roboterarm verfahren wird.

Der von dem Batterieeinheitsgehäuse 30 gelöste Deckel 31 wird zusätzlich von einem oder mehreren, am Tragrahmen 40 des Greifers 10 vorgesehenen Sauggreifelementen 80, erkennbar in Figuren 1 und 2a, an dessen Oberseite angesaugt und in Position gehalten. Vorzugsweise werden die Sauggreifelemente 80 aktiviert, nachdem dieAbdrückelemente 53 der Abdrückeinheiten 50 unter die Kontur des Deckels 31 gefahren wurden und/oder nachdem der Deckel abgehoben wurde. Anstelle oder zusätzlich zu den Sauggreifelementen 80 könnten bei entsprechender Eignung des Deckels auch Magnetgreifelemente eingesetzt werden.

Der Roboterarm 20, welcher über die Schnittstelle 71 an den Tragrahmen 40 angebunden ist, fährt den abgelösten Deckel 31 zu einem Ablageplatz. Dort geben die Abdrückelemente 53 die Kontur des Deckels 31 zum Ablegen des Deckels 31 durch Verfahren der Abdrückeinheiten 50 in ihre inaktive Stellung, hier durch Ausschwenken der Abdrückeinheiten 50 mittels der Schwenkaktoren 60, frei. In einer bevorzugten Ausführung der Erfindung bleiben die Sauggreifelemente 80 noch aktiv, nachdem die Abdrückelemente 53 der Abdrückeinheiten 50 die Kontur des Deckels 31 freigegeben haben, um ein sicheres Ablegen zu ermöglichen.

Der Deckel 31 wird daraufhin abgelegt und die Sauggreifelemente 80 werden deaktiviert.

Der Roboterarm 20 verfährt den Greifer 10 zu einer weiteren Batterieeinheit, und der Prozess kann von neuem beginnen.

Die in den Figuren 1 - 3 dargestellte Anzahl an Abdrückeinheiten 50, Schwenkaktoren 60 und Sauggreifelementen 80 ist nicht beschränkt auf die dargestellte Anzahl, vielmehr ist die hier präsentierte Darstellungsform des Greifers lediglich eine mögliche Ausführungsform, die je nach Bedarf, wie Größe des Batterieeinheitsgehäuses, verändert und angepasst werden kann, um eine optimale Demontage des Deckels eines Batterieeinheitsgehäuses zu garantieren.

Die Ansteuerung des Roboterarms 20 und des Greifers 10 erfolgt gemäß der Erfindung automatisiert durch eine entsprechend ausgeführte Steuerung.

## Patentansprüche

1. System zur automatisierten Demontage eines Deckels (31) einer Batterieeinheit mit einem Greifer, einer Handlingeinheit (20), insbesondere einem Roboter, und einer Steuerung, wobei der Greifer umfasst:
- eine Schnittstelle (71) zur Montage des Greifers an der Handlingeinheit (20),
- einen Tragrahmen (40) und
- eine Mehrzahl von Abdrückeinheiten (50), mit welchem der Deckel (31) von einem Gehäuse (30) der Batterieeinheit ablösbar ist,
wobei die Abdrückeinheiten (50) jeweils ein Abdrückelement (53), welches unter eine Kontur des Deckels (31) fahrbar ist, einen Aktor (55) und ein Abstützelement (51) umfassen, wobei das Abdrückelement (53) mittels des Aktors (55) anhebbar ist, während sich die Abdrückeinheit (50) über das Abstützelement (51) an einem Gegenelement (32) abstützt,
wobei die Steuerung so ausgestaltet ist, dass sie die Handlingeinheit und den Greifer so ansteuert, dass die Demontage des Deckels automatisiert erfolgt.

2. System nach Anspruch 1, wobei die das Abdrückelement (53), das Abstützelement (51) und den Aktor (55) umfassenden Abdrückeinheiten (50) durch mindestens einen Verfahraktor verfahrbar an dem Tragrahmen (40) angeordnet sind, und insbesondere über einen Schwenkaktor (60) schwenkbar oder über einen Linearaktor (55) linear verfahrbar an dem Tragrahmen (40) angeordnet sind.

3. System nach Anspruch 2, wobei die Abdrückelemente (53) durch Verfahren der Abdrückeinheiten (50) mittels des Verfahraktors in einen Arbeits-Zustand unter die Kontur des Deckels (31) verfahrbar sind und/oder wobei sich die Abstützelemente (51) im Arbeits-Zustand an einer unterhalb der Kontur des Deckels (31) angeordneten Kontur des Gehäuses (30), insbesondere einem Bodenbereich des Gehäuses (30), abstützen können.

4. System nach einem der vorangegangenen Ansprüche, mit einer Breiten- und/oder Längenverstellung, über welche der im Arbeits-Zustand bestehende Abstand der Abdrückeinheiten (50) voneinander veränderbar ist, wobei mindestens eine Verstellachse vorgesehen ist, an welcher eine oder mehrere Abdrückeinheiten (50) verstellbar angeordnet sind, wobei bevorzugt eine oder mehrere Abdrückeinheit (50) zusammen mit einem Verfahraktor eine Baueinheit bilden, welche an der Verstellachse verstellbar angeordnet ist, oder wobei der im Arbeits-Zustand bestehende Abstand der Abdrückeinheiten (50) voneinander über jene Verfahraktoren, über welche die Abdrückeinheiten (50) in ihren Arbeits-Zustand verfahrbar sind, einstellbar ist.

5. System nach einem der vorangegangenen Ansprüche, wobei der Abstand zwischen einer Abdrückfläche (54) der Abdrückelemente (53) und einer Abstützfläche (52) der Abstützelemente (51) durch den Aktor (55) veränderbar ist, wobei bevorzugt die Abdrückelemente (53) durch den jeweiligen Aktor (55) linear gegenüber dem jeweiligen Abstützelement (51) verfahrbar sind, um die Abdrückfläche (54) anzuheben, und/oder wobei die Abdrückeinheit (50) einen Verbindungsbereich (61) aufweist, über welchen sie mit dem Tragrahmen (40) in Verbindung steht, wobei das Abdrückelement (53) gegenüber dem Verbindungsbereich (61) beweglich an der Abdrückeinheit (50) angeordnet ist, so dass der Verbindungsbereich (61) und damit der Tragrahmen (40) beim Anheben des Abdrückelements (53) nicht angehoben wird, wobei das Abdrückelement (53) bevorzugt entlang einer Führung (56) an der Abdrückeinheit (50) geführt ist.

6. System nach einem der vorangegangenen Ansprüche, mit einem oder mehreren Greifelementen (80), insbesondere Sauggreifelementen, zum Halten des Deckels (31) an dessen Oberseite.

7. System nach einem der vorangegangenen Ansprüche, wobei die Aktoren (55) der Abstützelemente (51) separat ansteuerbar sind.

8. System nach einem der vorangegangenen Ansprüche, wobei die Schnittstelle (71) zur Montage des Greifers an der Handlingeinheit (20) eine Ausgleichseinheit (70) aufweist, welche eine Relativbewegung des Tragrahmens (40) gegenüber der Schnittstelle (71) ermöglicht, wobei die Ausgleichseinheit (70) bevorzugt einen Aktor (72) aufweist, über welchen sie starr schaltbar ist.

9. System nach einem der vorangegangenen Ansprüche, wobei die Steuerung so ausgestaltet ist, dass mindestens zwei Abdrückeinheiten (50) nacheinander betätigt werden, um den Deckel (31) anzuheben, wobei die beiden Abdrückeinheiten (50) bevorzugt nebeneinander angeordnet sind und/oder wobei die Abdrückeinheiten (50) des Greifers bevorzugt nacheinander um den Rand des Deckels (31) umlaufend betätigt werden, oder wobei alle Abdrückeinheiten (50) gleichzeitig betätigt werden.

10. System nach einem der vorangegangenen Ansprüche, wobei die Steuerung so ausgestaltet ist, dass der Deckel (31) nach dem Lösen von dem Gehäuse (30) durch die Abdrückelemente (53) der Abrückeinheiten (50) gehalten und/oder gesichert wird, während er über die Handlingeinheit (20) zu einem Ablageplatz gefahren wird, wobei die Abdrückelemente (53) bevorzugt zum Ablegen des Deckels (31) die Kontur des Deckels (31) freigeben, insbesondere indem die Abdrückeinheiten (50) von der Kontur des Deckels (31) weg verfahren, insbesondere geschwenkt, werden.

11. System nach Anspruch 10, wobei die Steuerung so ausgestaltet ist, dass der Deckel (31) durch einen oder mehrere zusätzliche Greifelemente (80) gehalten wird, welche bevorzugt an der Oberseite des Deckels (31) angreifen, insbesondere Saug- oder Magnetgreifelemente, während er zu einem Ablageplatz gefahren wird, wobei bevorzugt das oder die Geifelemente (80) erst aktiviert werden, nachdem die Abdrückelemente (53) der Abrückeinheiten (50) unter die Kontur des Deckels (31) gefahren wurden, und/oder wobei das oder die Greifelemente (80) noch aktiv bleiben, nachdem die Abdrückelemente (53) der Abrückeinheiten (50) die Kontur des Deckels (31) freigeben, um ein sicheres Ablegen zu ermöglichen.

12. System nach einem der vorangegangenen Ansprüche, wobei die Steuerung so ausgestaltet ist, dass die Ausgleichseinheit (70) freigeschaltet ist, während die Abdrückelemente (53) unter die Kontur des Deckels (31) gefahren wurden, insbesondere während die Abdrückelemente (53) durch Verfahren der Abdrückeinheiten (50) unter die Kontur des Deckels (31) gefahren wurden.

13. System nach einem der vorangegangenen Ansprüche, wobei die Steuerung so ausgestaltet ist, dass die Ausgleichseinheit (70) freigeschaltet ist, während die Aktoren (55) der Abdrückeinheiten (50) aktiviert werden, um den Deckel (31) von dem Gehäuse (30) zu lösen.

14. Verfahren zur automatisierten Demontage eines Deckels (31) einer Batterieeinheit mit einem System nach einem der vorangegangenen Ansprüche, wobei der Deckel (31) angehoben wird, indem die unter die Kontur des Deckels (31) greifenden Abdrückelemente (53) mittels des jeweiligen Aktors (55) angehoben werden, während sich die Abdrückeinheit (50) über das Abstützelement (51) an einem Gegenelement (32) abstützt.

## Claims

1. A system for the automated dismantling of a cover (31) of a battery unit with a gripper, a handling unit (20), in particular a robot, and a controller, wherein the gripper comprises:
- an interface (71) for mounting the gripper on the handling unit (20),
- a supporting frame (40), and
- a plurality of push-off units (50), with which the cover (31) is detachable from a housing (30) of the battery unit,
wherein the push-off units each comprise a push-off element (53), which is driveable under a contour of the cover (31), an actuator (55) and a support element (51), wherein the push-off element (53) can be lifted by means of the actuator (55) whilst the push-off unit (50) is supported on a counter element (32) via the support element (51),
wherein the controller is configured such that it controls the handling unit and the gripper such that the cover is dismantled in an automated manner.

2. The system according to claim 1, wherein the push-off units (50) comprising the push-off element (53), the support element (51) and the actuator (55) are arranged so as to be movable on the supporting frame (40) by at least one travel actuator, and in particular are arranged on the supporting frame (40) so as to be pivotable via a pivot actuator or so as to be linearly movable via a linear actuator (55).

3. The system according to claim 2, wherein the push-off elements (53) are movable beneath the contour of the cover (31) by moving the push-off units (50) by means of the travel actuator into a working state, and/or wherein the support elements (51) in the working state can be supported on a contour of the housing (30) arranged below the contour of the cover (31), in particular a base region of the housing (30).

4. The system according to any one of the preceding claims, with a width and/or length adjustment, via which the spacing, which exists in the working state, of the push-off units (50) from one another is changeable, wherein at least one adjustment shaft is provided, on which one or more push-off units (50) are arranged adjustably, wherein preferably one or more push-off units (50) together with a travel actuator form a structural unit, which is arranged adjustably on the adjustment shaft, or wherein the spacing, which exists in the working state, of the push-off units (50) from one another is adjustable via those travel actuators via which the push-off units (50) are movable into their working state.

5. The system according to any one of the preceding claims, wherein the spacing between a push-off face (54) of the push-off elements (53) and a support face (52) of the support elements (51) is changeable by the actuator (55), wherein preferably the push-off elements (53) are movable linearly by the respective actuator (55) relative to the respective support element (51) in order to lift the push-off face (54), and/or wherein the push-off unit (50) has a connection region (61), via which it is connected to the supporting frame (40), wherein the push-off element (53) is arranged on the push-off unit (50) movably relative to the connection region (61), so that the connection region (61) and thus the supporting frame (40) is not lifted when the push-off element (53) is lifted, wherein the push-off element (53) is preferably guided along a guide (56) on the push-off unit (50).

6. The system according to any one of the preceding claims, with one or more gripping elements (80), in particular suction gripping elements, for holding the cover (31) on its upper side.

7. The system according to any one of the preceding claims, wherein the actuators (55) of the support elements (51) are separately controllable.

8. The system according to any one of the preceding claims, wherein the interface (71), for mounting the gripper on the handling unit (20), has a compensation unit (70), which enables a relative movement of the supporting frame (40) with respect to the interface (71), wherein the compensation unit (70) preferably has an actuator (72), via which it is rigidly switchable.

9. The system according to any one of the preceding claims, wherein the controller is configured such that at least two push-off units (50) are actuated successively in order to lift the cover (31), wherein the two push-off units (50) are preferably arranged adjacently to one another, and/or wherein the push-off units (50) of the gripper are actuated preferably circumferentially successively around the edge of the cover (31), or wherein all push-off units (50) are actuated simultaneously.

10. The system according to any one of the preceding claims, wherein the controller is configured such that the cover (31), once detached from the housing (30), is held and/or secured by the push-off elements (53) of the push-off units (50) whilst it is moved via the handling unit (20) to a set-down location, wherein the push-off elements (53) preferably release the contour of the cover (31) to set down the cover (31), in particular by moving, in particular pivoting, the push-off units (50) away from the contour of the cover (31).

11. The system according to claim 10, wherein the controller is configured such that the cover (31) is held by one or more additional gripping elements (80), which preferably engage on the upper side of the cover (31), in particular suction or magnetic gripping elements, whilst the cover is moved to a set-down location, wherein preferably the gripping element or the gripping elements (80) are only activated once the push-off elements (53) of the push-off units (50) have been driven beneath the contour of the cover (31), and/or wherein the gripping element or the gripping elements (80) also remain active once the push-off elements (53) of the push-off units (50) release the contour of the cover (31) in order to allow secure set-down.

12. The system according to any one of the preceding claims, wherein the controller is configured such that the compensation unit (70) is enabled whilst the push-off elements (53) have been driven beneath the contour of the cover (31), in particular whilst the push-off elements (53) have been driven beneath the contour of the cover (31) by moving the push-off units (50).

13. The system according to any one of the preceding claims, wherein the controller is configured such that the compensation unit (70) is enabled whilst the actuators (55) of the push-off units (50) are activated in order to detach the cover (31) from the housing (30).

14. A method for the automated dismantling of a cover (31) of a battery unit with a system according to any one of the preceding claims, wherein the cover (31) is lifted by lifting the push-off elements (53), which grip beneath the contour of the cover (31), by means of the respective actuator (55), whilst the push-off unit (50) is supported on a counter element (32) via the support element (51).

## Revendications

1. Système pour le démontage automatisé d'un couvercle (31) d'une unité de batterie, avec un preneur, une unité de manipulation (20), notamment un robot, et une commande, le preneur comprenant :
- une interface (71) pour le montage du preneur sur l'unité de manipulation (20),
- un châssis porteur (40) et
- une pluralité d'unités de détachement (50), avec lesquelles le couvercle (31) peut être séparé d'un boîtier (30) de l'unité de batterie,
les unités de détachement (50) comprenant chacune un élément de détachement (53) qui peut être déplacé sous un contour du couvercle (31), un actionneur (55) et un élément d'appui (51), l'élément de détachement (53) pouvant être soulevé au moyen de l'actionneur (55) tandis que l'unité de détachement (50) s'appuie sur un élément antagoniste (32) par l'intermédiaire de l'élément d'appui (51),
la commande étant conçue de manière à commander l'unité de manipulation et le preneur de telle sorte que le démontage du couvercle s'effectue de manière automatisée.

2. Système selon la revendication 1, où les unités de détachement (50) comprenant l'élément de détachement (53), l'élément d'appui (51) et l'actionneur (55) sont agencées de manière déplaçable sur le châssis porteur (40) par au moins un actionneur de déplacement, et sont notamment agencées sur le châssis porteur (40) de manière pivotante par l'intermédiaire d'un actionneur de pivotement (60) ou de manière déplaçable linéairement par l'intermédiaire d'un actionneur linéaire (55).

3. Système selon la revendication 2, où les éléments de détachement (53) peuvent être déplacés dans un état de travail sous le contour du couvercle (31) par déplacement des unités de détachement (50) au moyen de l'actionneur de déplacement (31) et/ou où les éléments d'appui (51) peuvent s'appuyer, dans l'état de travail, sur un contour du boîtier (30) agencé en dessous du contour du couvercle (31), notamment une zone de fond du boîtier (30).

4. Système selon l'une quelconque des revendications précédentes, avec un réglage en largeur et/ou en longueur, par l'intermédiaire duquel la distance existant dans l'état de travail entre les unités de détachement (50) peut être modifiée, où au moins un axe de réglage est prévu, sur lequel une ou plusieurs unités de détachement (50) sont agencées de manière réglable, où de préférence une ou plusieurs unités de détachement (50) forment conjointement avec un actionneur de déplacement une unité structurelle qui est agencée de manière réglable sur l'axe de réglage, ou bien où la distance existant dans l'état de travail entre les unités de détachement (50) peut être ajustée par l'intermédiaire des actionneurs de déplacement par l'intermédiaire desquels les unités de détachement (50) peuvent être déplacées dans leur état de travail.

5. Système selon l'une quelconque des revendications précédentes, où la distance entre une surface de détachement (54) des éléments de détachement (53) et une surface d'appui (52) des éléments d'appui (51) peut être modifiée par l'actionneur (55), où de préférence les éléments de détachement (53) peuvent être déplacés par l'actionneur respectif (55) de manière linéaire par rapport à l'élément d'appui respectif (51) afin de soulever la surface de détachement (54), et/ou où l'unité de détachement (50) présente une zone de liaison (61) par l'intermédiaire de laquelle elle est en liaison avec le châssis porteur (40), où l'élément de détachement (53) est agencé de manière mobile sur l'unité de détachement (50) par rapport à la zone de liaison (61) de manière à ce que la zone de liaison (61) et donc le châssis porteur (40) ne soient pas soulevés lors du soulèvement de l'élément de détachement (53), où l'élément de détachement (53) est de préférence guidé le long d'un guide (56) sur l'unité de détachement (50).

6. Système selon l'une quelconque des revendications précédentes, avec un ou plusieurs éléments de préhension (80), notamment éléments de préhension à ventouse, pour maintenir le couvercle (31) sur son côté supérieur.

7. Système selon l'une quelconque des revendications précédentes, où les actionneurs (55) des éléments d'appui (51) peuvent être commandés séparément.

8. Système selon l'une quelconque des revendications précédentes, où l'interface (71) pour le montage du preneur sur l'unité de manipulation (20) présente une unité de compensation (70) qui permet un mouvement relatif du châssis porteur (40) par rapport à l'interface (71), où l'unité de compensation (70) présente de préférence un actionneur (72) par l'intermédiaire duquel elle peut être commutée de manière rigide.

9. Système selon l'une quelconque des revendications précédentes, où la commande est conçue de telle sorte qu'au moins deux unités de détachement (50) sont actionnées successivement pour soulever le couvercle (31), où les deux unités de détachement (50) sont de préférence agencées l'une à côté de l'autre et/ou où les unités de détachement (50) du preneur sont de préférence actionnées successivement de manière périphérique autour du bord du couvercle (31), ou bien où toutes les unités de détachement (50) sont actionnées simultanément.

10. Système selon l'une quelconque des revendications précédentes, où la commande est conçue de telle sorte que le couvercle (31), après avoir été séparé du boîtier (30) par les éléments de détachement (53) des unités de détachement (50), est maintenu et/ou sécurisé pendant qu'il est déplacé vers un emplacement de dépôt par l'intermédiaire de l'unité de manipulation (20), où les éléments de détachement (53) libèrent de préférence le contour du couvercle (31) pour déposer le couvercle (31), notamment en éloignant les unités de détachement (50) du contour du couvercle (31), notamment par pivotement.

11. Système selon la revendication 10, où la commande est conçue de telle sorte que le couvercle (31) est maintenu par un ou plusieurs éléments de préhension supplémentaires (80), qui agissent de préférence sur le côté supérieur du couvercle (31), notamment des éléments de préhension à ventouse ou magnétiques, pendant qu'il est déplacé vers un emplacement de dépôt,
où de préférence le ou les éléments de préhension (80) ne sont activés qu'après que les éléments de détachement (53) des unités de détachement (50) ont été déplacés sous le contour du couvercle (31), et/ou où le ou les éléments de préhension (80) restent encore actifs après que les éléments de détachement (53) des unités de détachement (50) ont libéré le contour du couvercle (31) afin de permettre un dépôt sûr.

12. Système selon l'une quelconque des revendications précédentes, où la commande est conçue de telle sorte que l'unité de compensation (70) est déverrouillée lorsque les éléments de détachement (53) ont été déplacés sous le contour du couvercle (31), notamment lorsque les éléments de détachement (53) ont été déplacés sous le contour du couvercle (31) par déplacement des unités de détachement (50).

13. Système selon l'une quelconque des revendications précédentes, où la commande est conçue de telle sorte que l'unité de compensation (70) est déverrouillée lorsque les actionneurs (55) des unités de détachement (50) sont activés afin de séparer le couvercle (31) du boîtier (30).

14. Procédé pour le démontage automatisé d'un couvercle (31) d'une unité de batterie avec un système selon l'une quelconque des revendications précédentes, où le couvercle (31) est soulevé en soulevant les éléments de détachement (53) s'engageant sous le contour du couvercle (31) au moyen de l'actionneur respectif (55), tandis que l'unité de détachement (50) s'appuie sur un élément antagoniste (32) par l'intermédiaire de l'élément d'appui (51).
